# FASCICULE DE BREVET EUROPEEN

(11) **EP 0 983 194 B1**
(45) Date de publication et mention de la délivrance du brevet: **07.08.2002**
(21) Numéro de dépôt: 98925758.9
(22) Date de dépôt: 20.05.1998
(51) Int. Cl.: B64D 17/38, F42B 10/56

(54) **DISPOSITIF D'ESCAMOTAGE DE PARACHUTE**
VORRICHTUNG ZUM FREIGEBEN EINES FALTSCHIRMES
DEVICE FOR CONCEALING A PARACHUTE

(30) Priorité: 22.05.1997 FR 9706244
(43) Date de publication de la demande: 08.03.2000
(73) Titulaire: European Aeronautic Defence and Space Company - EADS France, 75016 Paris (FR)
(72) Inventeur: ROZE des ORDONS, Jacques, F-91600 Savigny-sur-Orge (FR)
(74) Mandataire: Ilgart, Jean-Christophe
(86) Numéro de dépôt international: FR9801012
(87) Numéro de publication internationale: WO9852821

(56) Documents cités:
- DE-A- 4 013 361
- FR-A- 2 634 453
- US-A- 3 521 840
- US-A- 3 730 099
- US-A- 4 247 143

## Description

L'invention concerne un dispositif d'escamotage de parachute et a pour but de permettre des parachutages subreptices de charges telles que des munitions, des détecteurs ou des robots ou même des hommes sur un terrain ennemi.

Le parachutage ne doit pas être remarqué pour que la charge parachutée reste inaperçue, mais le parachute resté au sol est facilement repéré et compromet cette exigence. Le brevet français 2 634 453 décrit un dispositif d'escamotage du parachute en le consumant dès que la charge a atteint le sol. Il faut cependant que la matière du parachute s'y prête, et le résultat n'est pas toujours assuré, notamment sur un sol humide. Il faut aussi observer que la combustion peut facilement devenir visible, les parachutages subreptices étant normalement nocturnes.

C'est pourquoi il est proposé un dispositif d'escamotage différent et probablement plus sûr avec cette invention. Il comprend une bouteille de gaz comprimé plus léger que l'air, un ballon lié au parachute et relié à la bouteille par un conduit de gonflage, et un dispositif de séparation du parachute de la charge ainsi que des moyens de commande de l'ouverture de la bouteille et de la séparation du parachute.

Les différents aspects de l'invention seront décrit en liaison aux figures suivantes :

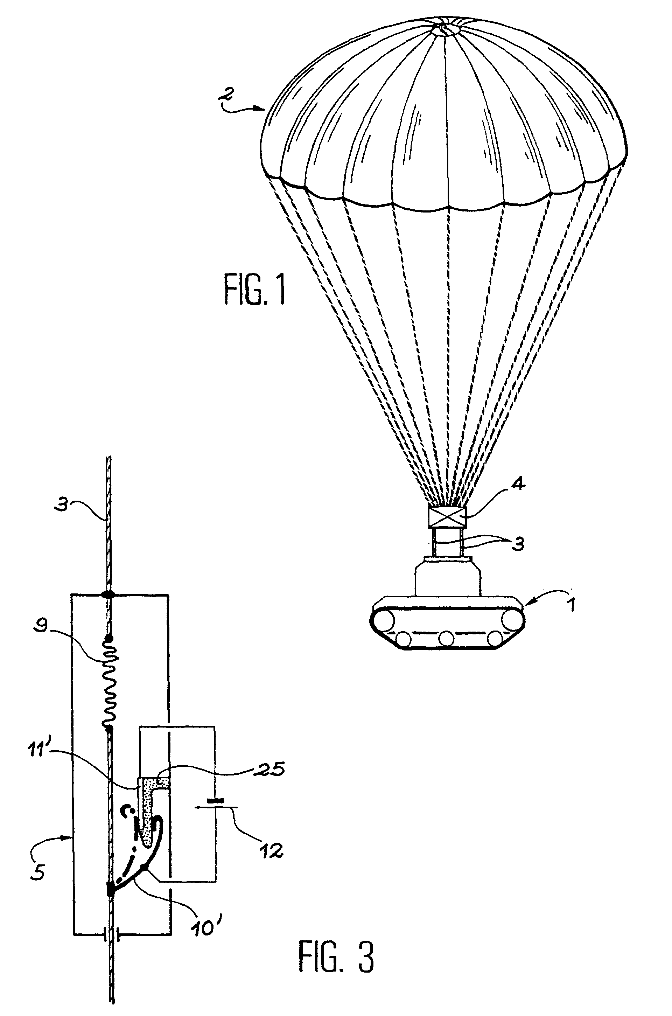

- la figure 1 est une vue générale de l'emplacement du dispositif,
- la figure 2 est une représentation du dispositif,
- et les figures 3 et 4 sont deux variantes du dispositif.

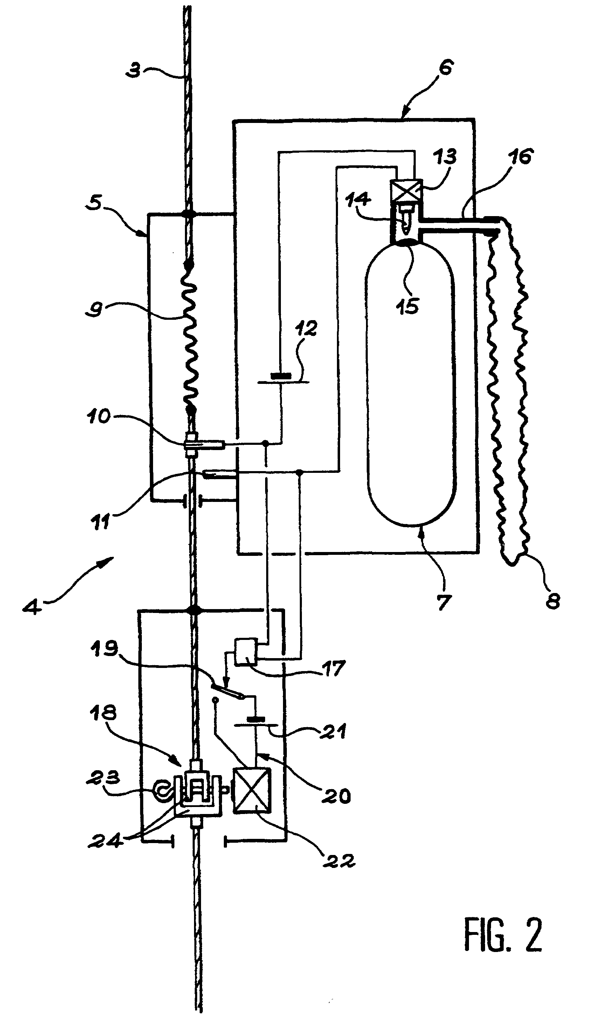

Une charge 1 à parachuter, telle qu'un robot, est suspendue à un parachute 2 par des suspentes 3 sur l'une desquelles se trouve le dispositif 4 constituant le sujet de l'invention. Ce dispositif est représenté complètement à la figure 2 et peut être pour l'essentiel logé dans un coffret accroché à la suspente 3.

Il comprend un capteur de tension 5 de la suspente 3, un circuit de mise à feu 6, une bouteille d'hélium comprimé 7, et un ballon 8 hors du coffret. Le capteur de tension 5 comprend essentiellement un ressort 9 qui remplace la suspente 3 sur une partie de sa longueur et s'allonge en fonction de sa tension ; il porte un contact mobile 10 fixé à la suspente 3 et situé légèrement au-dessus d'un contact fixe 11 ; les contacts 10 et 11 sont reliés aux fils du circuit de mise à feu 6, qu'ils ferment en se joignant quand la charge 1 pèse au bout des suspentes 3 pendant le parachutage ; une batterie 12 inactive jusque là fait passer un courant par les contacts 10 et 11. Une boucle du circuit de mise à feu 6 passe par un détonateur 13 situé au bout de la bouteille 7 d'hélium comprimé, et l'explosion du détonateur 13 projette un percuteur 14 vers la bouteille 7 de façon à crever un opercule 15 qui maintenait l'hélium prisonnier. Comme le ballon 8 est relié à la bouteille 7 par un conduit de gonflage 16, l'hélium libéré gonfle le ballon 8 en passant par ce conduit. Quand le ballon 8 est gonflé, il exerce une poussée d'Archimède qui compense le poids du dispositif 4 et du parachute 2. Quand la charge 1 a atteint le sol, il suffit de larguer le parachute 2 pour que le ballon 8 l'entraîne en s'élevant dans l'atmosphère et que le vent l'emporte. La charge 1 reste seule au sol et sa détection devient beaucoup plus difficile.

Le largage du parachute 2 peut être produit en sectionnant les suspentes 3 au moyen du circuit de mise à feu 6. Une autre boucle de ce circuit passe une minuterie 17 d'un dispositif de largage 18. Quand le circuit est fermé, le courant de la batterie 12 parvient à la minuterie 17, qui est conçue pour commander un relais 19 au bout d'un temps déterminé, quand on est sûr que le sol a été atteint, et fermer ainsi un circuit 20 équipé d'une autre batterie 21 et d'un autre détonateur 22. Le courant de la batterie 21 met à feu le détonateur 22, qui coupe une liaison de la suspente 3, par exemple en projetant une goupille 23 par laquelle des anneaux 24 d'extrémité de deux brins de la suspente 3 étaient joints. La partie supérieure de la suspente 3, porteuse du dispositif 4, est alors libérée. Ce dispositif de largage 18 doit bien entendu être prévu pour toutes les suspentes. Bien d'autres moyens de commande pourraient être conçus en fonction des moyens de gonflage et des mécanismes de largage existants.

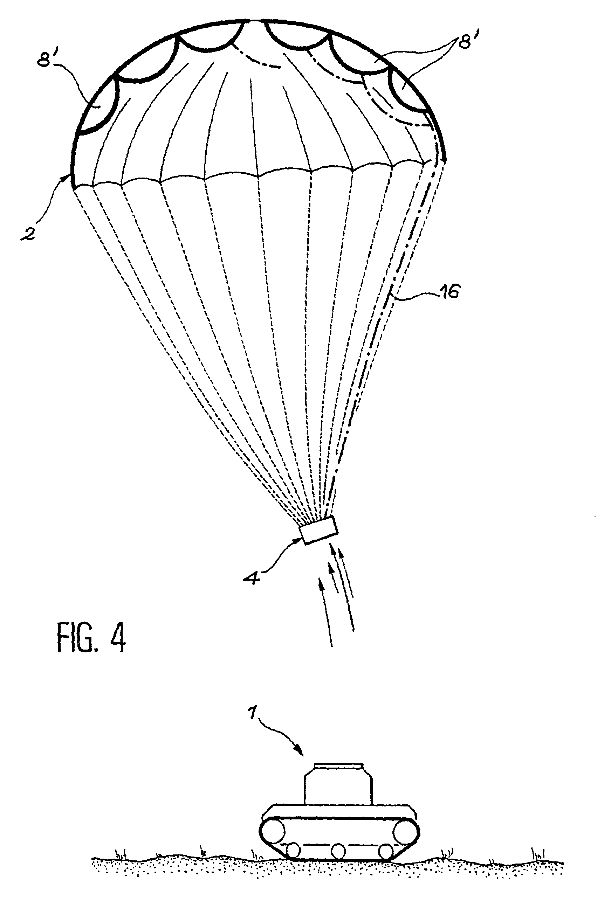

Une variante importante consiste à ne commander le gonflage du ballon 8 qu'une fois que la charge 1 a atteint le sol. On peut encore se servir du capteur de tension 5 pour produire la commande. Cependant, les contacts de mise à feu ne peuvent pas être placés de la même façon, et on peut proposer le montage de la figure 3, où le contact mobile 10' est une lame engagée dans une gaine 25 à un état fléchi avant de larguer la charge. La tension de la suspente 3 et l'allongement du ressort 9 permet de sortir le contact 10' de la gaine 25 et lui fait reprendre sa forme initiale, qui lui permettra de frotter sur le contact fixe 11' quand la tension de la suspente 3 cessera. Dans cette conception, la coupure des suspentes 3 pourra être commandée en même temps et le circuit de mise à feu 6 pourra être relié directement au détonateur 22.

On peut préférer remplacer le ou les ballons 8 autonomes par des ballons 8' constitués par une double enveloppe étanche au gaz du parachute 2. Cette construction est illustrée à la figure 4. Le même dispositif s'applique également à d'autres variantes de parachutes du type « parapente » voire même à des structures rigides ou semi-rigides comme des ailes volantes.

## Revendications

1. Dispositif d'escamotage d'un parachute (2) après qu'une charge (1) suspendue au parachute a atteint le sol, **caractérisé en ce qu'**il comprend une bouteille (7) de gaz comprimé plus léger que l'air, un ballon (8, 8') lié au parachute (2) et relié à la bouteille (7) par un conduit de gonflage, un dispositif de séparation (18) du parachute de la charge, et des moyens (6) de commande d'ouverture de la bouteille et de séparation du parachute.

2. Dispositif d'escamotage d'un parachute selon la revendication 1, **caractérisé en ce que** les moyens de commande comprennent un circuit électrique qui se ferme quand le parachute s'ouvre.

3. Dispositif d'escamotage d'un parachute selon la revendication 1, **caractérisé en ce que** les moyens de commande comprennent un circuit électrique qui se ferme quand la charge atteint le sol.

4. Dispositif d'escamotage d'un parachute selon l'une quelconque des revendications 2 ou 3, **caractérisé en ce que** les moyens de commande comprennent des charges explosives (13, 22) mises à feu par le circuit.

5. Dispositif d'escamotage d'un parachute selon l'une quelconque des revendications 1 à 4, **caractérisé en ce que** les moyens de commande comprennent un capteur de tension (5) d'une suspente (3) du parachute (2).

6. Dispositif d'escamotage d'un parachute selon l'une quelconque des revendications 1 à 5, **caractérisé en ce que** le ballon (8') est disposé sur le parachute.

## Patentansprüche

1. Vorrichtung zum Verschwindenlassen eines Fallschirms (2), nachdem eine an dem Fallschirm aufgehängte Last (1) den Boden erreicht hat, **dadurch gekennzeichnet, dass** sie eine Flasche (7) komprimierten Gases, das leichter ist als Luft, einen mit dem Fallschirm (2) gekoppelten und über eine Aufblasleitung mit der Flasche (7) verbundenen Ballon (8,8'), eine Vorrichtung (18) zum Trennen des Fallschirms von der Last sowie Mittel (8) zum Steuern des Öffnens der Flasche und des Lostrennens des Fallschirms umfasst.

2. Vorrichtung zum Verschwindenlassen eines Fallschirms nach Anspruch 1, **dadurch gekennzeichnet, dass** die Steuermittel einen elektrischen Schaltkreis, der sich schließt, wenn sich der Fallschirm öffnet, umfassen.

3. Vorrichtung zum Verschwindenlassen eines Fallschirms nach Anspruch 1, **dadurch gekennzeichnet, dass** die Steuermittel einen elektrischen Schaltkreis, der sich schließt, wenn die Last den Boden erreicht, umfassen.

4. Vorrichtung zum Verschwindenlassen eines Fallschirms nach einem der Ansprüche 2 oder 3, **dadurch gekennzeichnet, dass** die Steuermittel explosive Ladungen (13,22), die durch den Schaltkreis gezündet werden, umfassen.

5. Vorrichtung zum Verschwindenlassen eines Fallschirms nach einem der Ansprüche 1 bis 4, **dadurch gekennzeichnet, dass** die Steuermittel einen Spannungssensor (5) einer Aufhängung (3) des Fallschirms (2) umfassen.

6. Vorrichtung zum Verschwindenlassen eines Fallschirms nach einem der Ansprüche 1 bis 5, **dadurch gekennzeichnet, dass** der Ballon (8') auf/an dem Fallschirm angeordnet ist.

## Claims

1. Device for causing a parachute (2) to disappear after a load (1) suspended from the parachute has reached the ground, **characterized in that** it comprises a bottle (7) of compressed gas that is lighter than air, a balloon (8, 8') linked to the parachute (2) and connected to the bottle (7) by an inflation pipe, a device (18) for separating the parachute from the load, and means (6) of commanding the opening of the bottle and the separation of the parachute.

2. Device for causing a parachute to disappear according to claim 1, **characterized in that** the command means comprise a circuit closed when the parachute opens.

3. Device for causing a parachute to disappear according to claim 1, **characterized in that** the command means comprise an electric circuit which closes when the load reaches the ground.

4. Device for causing a parachute to disappear according to claim 2 or 3, **characterized in that** the command means comprise explosive charges (13, 22) fired by the circuit.

5. Device for causing a parachute to disappear according to any one of the claims 1 to 4, **characterized in that** the command means comprise a strain sensor (5) for a sling (3) of the parachute (2).

6. Device for causing a parachute to disappear according to any one of the claims 1 to 5, **characterized in that** the balloon (8') is arranged on the parachute.
